# EUROPÄISCHE PATENTSCHRIFT

(11) **EP 1 955 162 B1**
(45) Veröffentlichungstag und Bekanntmachung des Hinweises auf die Patenterteilung: **17.02.2010**
(21) Anmeldenummer: 06793696.3
(22) Anmeldetag: 21.09.2006
(51) Int. Cl.: G06F 11/07

(54) **VERFAHREN ZUR ERKENNUNG VON STATUSZUSTÄNDEN/ FEHLERZUSTÄNDEN**
METHOD FOR IDENTIFYING STATUS STATES/ERROR STATES
PROCÉDÉ POUR DÉTECTER DES ÉTATS / SITUATIONS DE DÉFAUT

(30) Priorität: 21.11.2005 DE 102005055341
(43) Veröffentlichungstag der Anmeldung: 13.08.2008
(73) Patentinhaber: ROBERT BOSCH GMBH, 70442 Stuttgart (DE)
(72) Erfinder: FLOREANI, Bruno, 70193 Stuttgart (DE)
(86) Internationale Anmeldenummer: PCT/EP2006/066573
(87) Internationale Veröffentlichungsnummer: WO 2007/057247

(56) Entgegenhaltungen:
- US-A- 4 558 447
- US-B1- 6 269 459

## Beschreibung

Die Erfindung betrifft ein Verfahren zur Erkennung von Statuszuständen/Fehlerzuständen an Treibem/Treiberschaltungen von elektronischen Schaltungen, insbesondere Computerschaltungen, bevorzugt bei Body-Computern, wobei durch Abfrage, insbesondere Softwareabfrage, einer auf einem Mikroprozessor laufenden Software eine Statusabfrage des Treibers/der Treiberschaltung erfolgt.

### Stand der Technik

Bei heutigen Body-Computern werden bei Treibern/Treiberschaltungen Leistungshalbleiter eingesetzt, wobei es mehrere Methoden zur Erkennung von Fehlerzuständen des Treibers/der Treiberschaltung gibt. Im Zuge dieser Anmeldung wird unter dem Fehlerzustand eines Treibers/einer Treiberschaltung ferner auch ein Fehler verstanden, der ausgangsseitig von dem Treiber/ausgangsseitig von der Treiberschaltung liegt. Zur Fehlererkennung gibt es a) so genannte CS (Current Sense)-Feedbackleitungen, die einen Analog/Digitalwert zurückspeisen. Ferner sind b) digitale Feedbackleitungen bekannt, die über den zeitlichen Verlauf von Signalen Rückschlüsse auf den Zustand des Treibers/der Treiberschaltung liefern. Schließlich ist es c) bekannt, serielle Steuer- und Feedbackleitungen einzusetzen, über die der jeweils aktuelle Zustand des Treibers abgefragt werden kann. Die Feedbackleitungen werden auch als Statusleitungen bezeichnet.

Sofern Lasten mit pulsweitenmodulierten Signalen betrieben werden, sind beispielsweise Frequenzen von 100 Hz bis über 20 kHz - je nach Anwendung beziehungsweise Last - gefordert. Die geforderte Genauigkeit für das Tastverhältnis beträgt im Allgemeinen 1 %. Die Ansteuerung und die Reaktion auf die Feedbackleitung liegen demnach im Bereich von 100 µs bei 100 Hz bis 5 x10⁻³ µs bei 20 kHz. Verallgemeinernde oder vereinfachende Einschränkungen bezüglich der anwendbaren Tastverhältnisse können nicht gemacht werden.

Eine sichere Auswertung des Systemzustands basierend auf Ansteuer- und Feedbacksignale ist auch bei Echtzeitsystemen durch die Software derzeit nicht zuverlässig erfüllbar, da Ansteuerung und Messung immer zeitlich auseinanderliegen. Zusätzlich ist zu berücksichtigen, dass die Messung keine Aussage über die zeitlichen Abhängigkeiten (zum Beispiel thermisches Schalten) über alle Betriebszustände liefern kann. Bei Treibern mit CS-Feedback kann es bei kurzen Ansteuerungen (kleines Tastverhältnis), bei denen der Strom nie in den Bereich eines Kurzschlussstromes kommen kann, nicht zum Erkennen eines über längere Zeit im Kurzschluss betriebenen Treibers kommen, das heißt, der Treiber kann unerkannt längere Zeit im Kurzschluss betrieben und unter Umständen geschädigt werden. Es fehlt hier die Rückmeldung vom Treiber, dass ein Resultat nicht verwertbar ist. Befindet sich der Treiber/die Treiberschaltung in einem Zustand thermischer Überlastung und schaltet unabhängig vom Ansteuersignal selbstständig ab, so kann dies am Feedbacksignal abgelesen werden. Wird dieser Zustand aufgrund von Abkühlung verlassen, zeigt das Feedbacksignal "i.o.", obwohl sich der Systemzustand "ein Kurzschluss liegt vor" nicht geändert hat.

Bei Treibern mit digitaler Feedbackleitung erfolgt eine Erkennung eines Kurzschlusses nach dem Pluspol der Betriebsspannung nur im ausgeschalteten Zustand. Falls die Fehlererkennung auch im eingeschalteten Zustand erfolgen soll, werden in den aktuellen Umsetzungen kurze Aus-Phasen eingefügt. Hier besteht folgende Schwierigkeit: Unter Umständen sind die kurzen Aus-Phasen an Lampen oder Leuchtdioden sichtbar, bei Relais kann es zu kurzzeitigem Ausschalten kommen. Die Fehler "Kurzschluss nach Masse" und "Unterbrechung" werden beide bei eingeschalteter Last überwacht (dies erfolgt über den Stromfluss). Eine Rückmeldung erfolgt für beide Fehlerarten über den gleichen logischen Pegel an der Feedbackleitung, wobei der Halbleitertreiber die beiden Fehlerarten über den zeitlichen Verlauf dieses Signals markiert. Hier kann es unter Umständen dazu kommen, dass sich der Treiber in der thermischen Überlast befindet und innerhalb einer Ein-Phase mehrmals aus- und wieder eingeschaltet wird. Dieses so genannte thermische Togglen wird in seiner Frequenz von verschiedensten Faktoren beeinflusst (zum Beispiel Versorgungsspannung, Außentemperatur, Selbsterwärmung des Steuergeräts, Entwärmungskonzept usw.). Verbindliche Rückschlüsse auf den Zustand des Treibers können nicht gemacht werden. Die Anforderung an die Software des Bodycomputers, die beiden Fehlerarten über den zeitlichen Verlauf unterscheiden zu können, stellen insofern ein Problem für den Mikroprozessor und die Software dar, als bei den vorstehend genannten Pulsweitenmodulations-Frequenzen die erforderlichen Abtast- und Reaktionszeiten unterhalb der möglichen Interruptlatenzzeiten liegen. Bei grenzwertigen Tastverhältnissen überschneiden sich unter Umständen die vom Treiber vorgegebenen Zeiten und Verzögerungen für das Feedbacksignal und die erforderlichen Ansteuersignale.

Schließlich wird bei Treibern mit serieller Feedbackleitung eine serielle Schnittstelle benötigt, zumeist CSI/SIO mit drei Leitungen (In, Out, Clock). Der interne Zustand des Treibers wechselt für den Hauptrechner unkontrollierbar. Treiber mit serieller Feedbackleitung sind zumeist Mehrfachtreiber, was das Protokoll aufbläht, da mehrere Ausgänge auf ihre Fehlerarten gleichzeitig auszuwerten sind.

Aus der US-A-4,558,447 ist eine Selbsttestmöglichkeit für nicht in Chips enthaltenen Treiberstufen für Prozessoren bekannt. So werden Fehlerzustände der Treiberstufen dadurch ermittelt, dass Ein- und Ausgangssignal miteinander verglichen werden. Bei Abweichungen wird auf einen Fehler geschlossen. Ein eventueller Fehlerzustand wird in einem Fehlerspeicher abgelegt, in dem auch eventuelle Fehlerzustände anderer Treiberschaltungen Oder-verknüpft hinterlegt sind.

### Vorteile der Erfindung

Aufgrund des erfindungsgemäßen Vorgehens, dass die Treiberschaltung nur durch das Abfragekommando der Software eine Statusantwort abgibt und dass die Treiberschaltung einen Fehlerzustand solange beibehält, bis der Fehlerzustand mittels der Statusantwort rückgemeldet und nach empfangener Rückmeldung der Treiberschaltung eine Erlaubnis zur Statusänderung übermittelt wird, wird ein anliegender Fehler eindeutig erkannt, das heißt, ein Fehler wird nicht fälschlicherweise detektiert. Hierzu antwortet der Treiber/die Treiberschaltung nur, wenn ein Abfragekommando abgesetzt wurde. Der Treiber/die Treiberschaltung setzt nicht selbstständig ein Antwortkommando ab. Ferner wechselt der Treiber/die Treiberschaltung nie den Zustand selbstständig. Ein Zustandswechsel erfolgt nur durch ein entsprechendes Kommando, insbesondere "Habe deinen Status erkannt, jetzt kannst du wechseln". Die Treiberschaltung kann insbesondere einem elektronischen Steuergerät eines Kraftfahrzeugs angehören.

Insbesondere ist vorgesehen, dass die Statusabfrage ein definiertes Abfragekommando ist.

Ferner ist es vorteilhaft, dass die Abgabe der Statusabfrage zu einem Einschalten eines Empfangsmodus des Mikroprozessors führt und der Empfang der Statusantwort abgewartet wird. Die Abfrage des Zustandes der Treiberschaltung durch die auf dem Mikroprozessor laufende Software erfolgt demgemäß über ein definiertes Abfragekommando. Der Mikroprozessor schaltet daraufhin in den Empfangsmodus und wartet auf die Antwort der Treiberschaltung.

Die Treiberschaltung bestätigt bevorzugt den Empfang des Abfragekommandos mit der Abgabe der definierten Statusantwort. Ferner ist die Statusantwort derart ausgebildet, dass sie mindestens eine Fehlerzustandsaussage enthält. Es kann insbesondere sein, dass ein Kurzschluss nach Masse vorliegt, dass ein Kurzschluss zur Plusspannung der Versorgungsbatterie besteht, dass eine Unterbrechung vorliegt. Ferner kann der gegenwärtige Status gemeldet werden, der "o.k.", "ein Fehler liegt an" und/oder "keine Aussage" enthalten kann.

Ferner ist es vorteilhaft, wenn die Fehlerzustandsaussage den Fehler eines Kurzschlusses nach Masse, den Fehler eines Kurzschlusses nach der Betriebsspannung/Batteriespannung und/oder den Fehler einer Unterbrechung enthält.

Als Treiberschaltung wird vorzugsweise eine Ausgangstreiberschaltung eingesetzt. Schließlich ist es möglich, dass eine Treiberschaltung mit mindestens einem am Ausgang liegenden Leistungshalbschalter verwendet wird.

Die Zeichnungen veranschaulichen die Erfindung anhand eines Ausführungsbeispiels, und zwar zeigt:
- Figur 1: einen Ausschnitt aus einer elektronischen Schaltung und
- Figur 2: eine Tabelle für eine mögliche Statusantwort einer Trei- berschaltung.

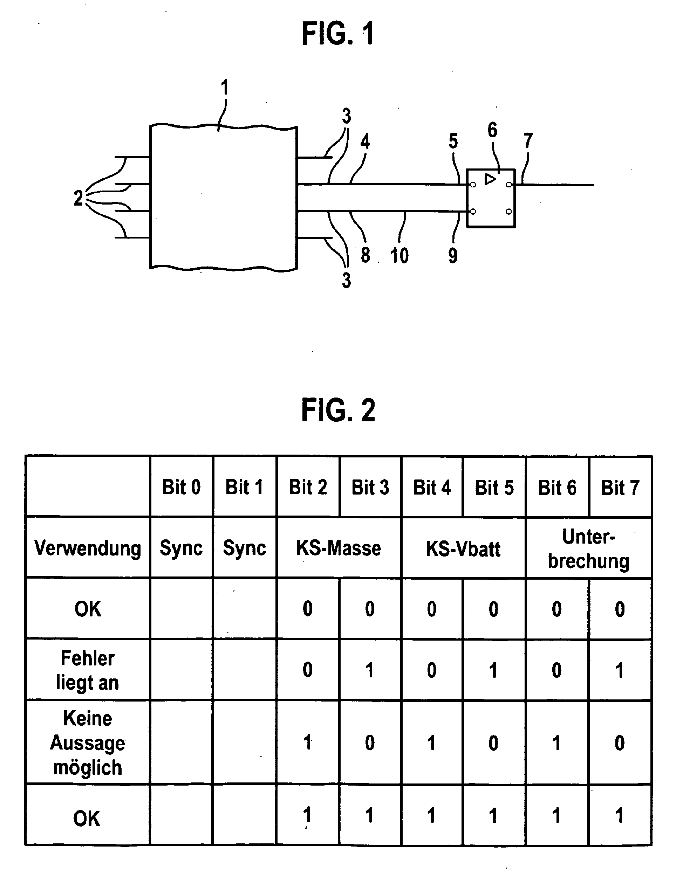

Die Figur 1 zeigt einen Prozessor, insbesondere Mikroprozessor 1, der mehrere Ein- und Ausgänge 2, 3 aufweist. Ein Ausgang 4 stellt ein Ansteuersignal zur Verfügung, das pulsweitenmoduliert ist und übermittelt dies an einen Eingang 5 eines Treibers 6/einer Treiberschaltung 6. Die Treiberschaltung 6 weist einen Ausgang 7 auf, an den weitere Schaltungsglieder angeschlossen sein können. Ein Aus-/Eingang 8 des Mikrocontrollers 1 steht mit einem Aus-/Eingang 9 der Treiberschaltung 6 in Verbindung. Diese so gebildete Verbindung 10 stellt eine Kontroll- und Feedbackleitung dar.

Liegt bei der Treiberschaltung 6 beziehungsweise liegt ausgangsseitig der Treiberschaltung (Ausgang 7) ein Fehler vor, so kann dieser durch Abfrage des Zustands der Treiberschaltung 6 durch eine auf den Mikroprozessor 1 laufende Software ermittelt werden. Dies erfolgt über ein definiertes Abfragekommando. Der Mikroprozessor 1 schaltet daraufhin in einen Empfangsmodus um und wartet die Antwort der Treiberschaltung 6 ab. Die Treiberschaltung 6 bestätigt das Abfragekommando mit einer definierten Antwort. In dieser Antwort sind alle Fehlerarten enthalten. Hierbei kann es sich beispielsweise um einen Kurzschluss nach Masse, um einen Kurzschluss nach der Batteriespannung V_{batt}, oder um eine Unterbrechung handeln. Ferner wird auch der gegenwärtige Status der Treiberschaltung 7 übermittelt, der "o.K." sein kann, oder ein "Fehler liegt an" oder "keine Aussage".

Die Anordnung ist derart getroffen, dass der Treiber/die Treiberschaltung 6 nie ihren Zustand selbstständig ändert. Ein Zustandswechsel erfolgt nur durch ein entsprechendes Kommando von dem Mikroprozessor 1, beispielsweise derart, "Habe deinen Status erkannt, jetzt kannst du wechseln".

Auch wenn der Treiber/die Treiberschaltung 6 zum Beispiel aufgrund thermischer Abschaltung den Ausgang 7 deaktiviert hat, bleibt er im Zustand "thermische Abschaltung/Kurzschluss nach Masse", wenn ein derartiger Fehler vorliegt. Dieser Zustand wird auch so über die Statusantwort bei der Abfrage rückgemeldet. Erst mit der Erlaubnis, den Zustand zu wechseln, erfolgt der Zustandsübergang. Ferner ist die Anordnung derart getroffen, dass der Treiber/die Treiberschaltung 6 nur dann antwortet, wenn ein Abfragekommando abgesetzt wurde. Er setzt nie selbsttätig ein Antwortkommando ab.

Werden pro Fehlerart je drei mögliche Zustände auswertbar gemacht, so braucht man für die Übertragung sechs Bits. Zwei weitere Bits eines 8-Bit-Standardschieberegisters können zur Synchronisierung, Plausibilisierung oder dergleichen verwendet werden. Die Tabelle der Figur 2 verdeutlicht die mögliche Statusantwort der Treiberschaltung 6.

Aufgrund der Erfindung sind keine zumeist nicht erfüllbaren Vorgaben an die Software im Hauptrechner/Mikroprozessor erforderlich, um die Diagnoseleitung zeitkritisch und rechtzeitig abzufragen. Der Zustand der Treiberschaltung und der vom Mikroprozessor erkannte Zustand werden synchronisiert. Es sind keine weiteren Leitungen erforderlich. Bestehende Mikroprozessorlogiken (Schieberegister) werden mitgenutzt. Da eine zeitkritische Abfrage entfällt, können mehrere Feedbackleitungen über Multiplexschaltungen auf den gleichen Mikroprozessoranschluss geführt werden. Das Übertragungprotokoll ist sehr einfach. Eine schnelle Übertragung ist nicht notwendig, da die Information im Schieberegister vorgehalten werden kann, bis die Software im Hauptprozessor/Mikroprozessor/Mikrocomputer bereit ist, die Daten auszulesen.

## Patentansprüche

1. Verfahren zur Erkennung von Statuszuständen/Fehlerzuständen an Treiberschaltungen von elektronischen Schaltungen, insbesondere Computerschaltungen, wobei durch Softwareabfrage einer auf einem Mikroprozessor (1) laufenden Software eine Statusabfrage der Treiberschaltung (6) erfolgt, **dadurch gekennzeichnet, dass** die Treiberschaltung (6) nur durch das Abfragekommando der Software eine Statusantwort an den Mikroprozessor (1) abgibt und dass die Treiberschaltung (6) einen Fehlerzustand solange beibehält, bis der Fehlerzustand mittels der Statusantwort an den Mikroprozessor (1) rückgemeldet und nach empfangener Rückmeldung der Treiberschaltung (6) vom Mikroprozessor (1) eine Erlaubnis zur Statusänderung übermittelt wird.

2. Verfahren nach Anspruch 1, **dadurch gekennzeichnet, dass** die Statusabfrage ein definiertes Abfragekommando ist.

3. Verfahren nach einem der vorhergehenden, Ansprüche, **dadurch gekennzeichnet, dass** die Abgabe der Statusabfrage zu einem Einschalten eines Empfangsmodus des Mikroprozessors (1) führt und der Empfang der Statusantwort abgewartet wird.

4. Verfahren nach einem der vorhergehende Ansprüche, **dadurch gekennzeichnet, dass** die Treiberschaltung (6) den Empfang des Abfragekommandos mit der Abgabe der definierten Statusantwort bestätigt.

5. Verfahren nach einem der vorhergehenden Ansprüche, **dadurch gekennzeichnet, dass** die Statusantwort mindestens eine Fehlerzustandsaussage enthält.

6. Verfahren nach einem der vorhergehenden Ansprüche, **dadurch gekennzeichnet, dass** die Fehlerzustandsaussage den Fehler eines Kurzschlusses nach Masse, den Fehler eines Kurzschlusses nach der Batteriespannung (V_{batt}) und/oder den Fehler einer Unterbrechung enthält.

7. Verfahren nach einem der vorhergehenden Ansprüche, **dadurch gekennzeichnet, dass** als Treiberschaltung (6) eine Ausgangstreiberschaltung eingesetzt wird.

8. Verfahren nach einem der vorhergehenden sprüche, **dadurch gekennzeichnet, dass** eine Treiberschaltung (6) mit mindestens einem im Ausgang liegenden Leistungshalbleiter verwendet wird.

## Claims

1. Method for identifying status states/fault states in driver circuits of electronic circuits, in particular computer circuits, the status of the driver circuit (6) being interrogated by interrogating software running on a microprocessor (1), **characterized in that** the driver circuit (6) emits a status response to the microprocessor (1) only as a result of the interrogation command from the software, and **in that** the driver circuit (6) retains a fault state until the fault state is fed back to the microprocessor (1) by means of the status response and the microprocessor (1) transmits permission to change status to the driver circuit (6) after the feedback has been received.

2. Method according to Claim 1, **characterized in that** the status interrogation is a defined interrogation command.

3. Method according to one of the preceding claims, **characterized in that** the emission of the status interrogation results in a receiving mode of the microprocessor (1) being switched on, and the reception of the status response is awaited.

4. Method according to one of the preceding claims, **characterized in that** the driver circuit (6) confirms the reception of the interrogation command with the emission of the defined status response.

5. Method according to one of the preceding claims, **characterized in that** the status response contains at least one fault state declaration.

6. Method according to one of the preceding claims, **characterized in that** the fault state declaration contains the fault of a short circuit to earth, the fault of a short circuit to the battery voltage (V_{batt}) and/or the fault of an interruption.

7. Method according to one of the preceding claims, **characterized in that** an output driver circuit is used as the driver circuit (6).

8. Method according to one of the preceding claims, **characterized in that** a driver circuit (6) having at least one power semiconductor at the output is used.

## Revendications

1. Procédé de détection d'états/de défauts sur des circuits d'attaque de circuits électroniques, notamment des circuits d'ordinateur, une interrogation de l'état du circuit d'attaque (6) étant effectuée par une interrogation logicielle d'un logiciel exécuté sur un microprocesseur (1), **caractérisé en ce que** le circuit d'attaque (6) ne délivre une réponse d'état que sur l'instruction d'interrogation du logiciel et que le circuit d'attaque (6) conserve un état de défaut jusqu'à ce que l'état de défaut ait été signalé au microprocesseur (1) au moyen de la réponse d'état et, après la réception du message en retour, qu'une autorisation de changement d'état ait été communiquée au circuit d'attaque (6) par le microprocesseur (1).

2. Procédé selon la revendication 1, **caractérisé en ce que** l'interrogation d'état est une instruction d'interrogation définie.

3. Procédé selon l'une des revendications précédentes, **caractérisé en ce que** la délivrance de l'interrogation d'état donne lieu à une activation d'un mode de réception du microprocesseur (1) et à l'attente de la réception de la réponse d'état.

4. Procédé selon l'une des revendications précédentes, **caractérisé en ce que** le circuit d'attaque (6) confirme la réception de l'instruction d'interrogation par la délivrance de la réponse d'état définie.

5. Procédé selon l'une des revendications précédentes, **caractérisé en ce que** la réponse d'état contient au moins une déclaration d'état de défaut.

6. Procédé selon l'une des revendications précédentes, **caractérisé en ce que** la déclaration d'état de défaut contient le défaut d'un court-circuit à la masse, le défaut d'un court-circuit à la tension de batterie (V_{batt}) et/ou le défaut d'une interruption.

7. Procédé selon l'une des revendications précédentes, **caractérisé en ce que** le circuit d'attaque (6) utilisé est un circuit d'attaque de sortie.

8. Procédé selon l'une des revendications précédentes, **caractérisé en ce que** le circuit d'attaque (6) utilisé comprend au moins un semiconducteur de puissance qui se trouve dans la sortie.
